# FASCICULE DE BREVET EUROPEEN

(11) **EP 4 001 619 B1**
(45) Date de publication et mention de la délivrance du brevet: **21.06.2023**
(21) Numéro de dépôt: 21206788.8
(22) Date de dépôt: 05.11.2021
(51) Int. Cl.: F02C 7/36, F16H 1/28, F16H 57/04, F16H 57/08

(54) **RÉDUCTEUR MÉCANIQUE DE TURBOMACHINE D'AÉRONEF**
MECHANISCHES GETRIEBE EINER LUFTFAHRZEUG-TURBOMASCHINE
MECHANICAL GEAR FOR AIRCRAFT TURBINE ENGINE

(30) Priorité: 12.11.2020 FR 2011581
(43) Date de publication de la demande: 25.05.2022
(73) Titulaire: Safran Transmission Systems, 92700 Colombes (FR)
(72) Inventeur: BECK, Guillaume Julien, 77550 MOISSY-CRAMAYEL (FR); GEDIN, Patrice Jocelyn Francis, 77550 MOISSY-CRAMAYEL (FR); LEFEBVRE, Simon Loïc Clément, 77550 MOISSY-CRAMAYEL (FR); PAP, Bálint, 77550 MOISSY-CRAMAYEL (FR); PIGOTT, Quentin Pierre Henri, 77550 MOISSY-CRAMAYEL (FR); SIMON, Adrien Louis, 77550 MOISSY-CRAMAYEL (FR)
(74) Mandataire: Gevers & Orès

(56) Documents cités:
- EP-A1- 3 726 031
- DE-A1-102018 009 737

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1 -2 987 416, FR-A1 -3 008 462, FR-A1-3 008 462 et FR-A1-3 041 054. L'état de l'art comprend également les documents EP-A1-3 726 031 et DE-A1-10 2018 009737.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés de un ou plusieurs étages d'engrènement. Cet engrènement est assuré de différentes façons comme par contact, par friction ou encore par champs magnétique.

Dans la présente demande, on entend par « étage » ou « denture », une série de dents d'engrènement avec une série de dents complémentaires. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures ou deux séries de dents qui sont situées sur des diamètres différents. Une première denture coopère avec le solaire et une seconde denture coopère avec la couronne.

Par ailleurs, chaque satellite est centré et guidé en rotation autour d'un axe par un palier qui est porté par le porte-satellites. Il existe plusieurs technologies de palier pour cette application et la présente demande concerne plus spécifiquement l'utilisation de paliers hydrodynamiques de guidage des satellites dans un réducteur mécanique.

Dans la présente demande, on entend par « palier hydrodynamique », un palier comportant un corps engagé dans un satellite et autour duquel est situé un film d'huile sous pression. Dans l'état de la technique, un palier hydrodynamique de satellite comprend un corps cylindrique comportant une surface cylindrique externe qui s'étend à l'intérieur d'une surface cylindrique interne du satellite. Le film d'huile sous pression est intercalé entre ces surfaces et permet de ne pas avoir de contact entre ces surfaces.

Un des désavantages de ce type de réducteur est lié à la dimension axiale relativement importante des satellites qui reprennent des charges importantes générées par la transmission du couple au niveau des engrènements, ainsi que par les effets centrifuges appliqués aux satellites dans le cas d'un réducteur épicycloïdal. Les paliers qui supportent les satellites et les guident en rotation sont donc chargés et il y a peu de place pour les intégrer sans augmenter considérablement l'encombrement du réducteur.

Il serait possible d'utiliser comme paliers des roulements à éléments roulants. Cependant, les roulements ont une capacité de charge qui ne permet pas de les placer sous les dentures des satellites, il faut alors les placer à l'extérieur des satellites pour leur conférer un diamètre suffisant, ce qui augmente considérablement l'encombrement du réducteur.

Du point de vue de l'encombrement, il est donc préférable d'utiliser des paliers lisses ou paliers hydrodynamiques qui ont des capacités de charge plus élevées. Cela permet de placer les paliers sous les dentures du satellite, c'est-à-dire dans un espace de faible diamètre et long axialement. Un palier hydrodynamique est en général alimenté en huile par son milieu et cette huile est évacuée par ses extrémités axiales. Il est aisé de concevoir un palier long qui s'étend sur toute la longueur du satellite. Un tel palier a une capacité de charge supérieure au minimum requis et demande un débit d'huile important puisque ce débit dépend entre autre de la longueur du palier. Ce type de palier génère également des pertes de puissance importantes. Or, pour avoir un réducteur efficace, le débit d'huile demandé et les pertes de puissance doivent être les plus faibles possible.

L'invention propose ainsi un perfectionnement au guidage des satellites par des paliers hydrodynamiques, lorsque ces satellites sont à double étage d'engrènement.

### Résumé de l'invention

L'invention concerne un réducteur mécanique de turbomachine, en particulier d'aéronef, ce réducteur comportant :
- un solaire ayant un axe de rotation,
- une couronne qui s'étend autour du solaire,
- des satellites qui sont engrenés avec le solaire et la couronne, chaque satellite comportant une première denture ayant un premier diamètre moyen pour l'engrènement avec le solaire, et une seconde denture ayant un second diamètre moyen, différent dudit premier diamètre, pour l'engrènement avec la couronne, les première et seconde dentures de chaque satellite présentant une symétrie par rapport à un plan perpendiculaire audit axe et passant sensiblement au milieu du satellite, chacune des première et seconde dentures comprenant deux séries de dents, les deux séries de dents de la première denture étant disposée de part et d'autre dudit plan, et les deux séries de dents de la seconde denture étant disposées de part et d'autre dudit plan et de la première denture,
- des paliers hydrodynamiques de guidage en rotation des satellites, ces paliers hydrodynamiques étant portés par un porte-satellites et comprenant des corps cylindriques qui sont engagés dans les satellites et qui sont configurés pour être alimentés en huile et pour former des films d'huile de guidage entre les corps cylindriques et les satellites,
caractérisé en ce que chacun des satellites est guidé par deux paliers hydrodynamiques indépendants l'un de l'autre et disposés respectivement de part et d'autre dudit plan, au droit des séries de dents de la seconde denture.

Contrairement à l'art antérieur qui propose de guider chaque satellite par un unique palier hydrodynamique, l'invention propose de guider chaque satellite par deux paliers hydrodynamiques. Les paliers de guidage d'un même satellite sont à distance et indépendants l'un de l'autre. On comprend donc que ces paliers sont plus courts qu'un unique palier de guidage d'un satellite, et utilisent en outre moins d'huile en fonctionnement du fait de leur plus faible dimension axiale. Les débits d'huile demandés sont alors considérablement réduits, car les longueurs des paliers peuvent être calculées pour avoir exactement la capacité de charge requise pour reprendre les efforts d'engrènement et les effets centrifuges. De plus, en étant espacés, les deux paliers sont bien moins sensibles aux éventuels désalignements qu'un palier unique faisant la longueur du satellite.

Le réducteur selon l'invention peut comprendre une ou plusieurs des caractéristiques suivantes, prises isolément les unes des autres, ou en combinaison les unes avec les autres :
- chacun des satellites est traversé par un unique corps cylindrique définissant lesdits deux paliers hydrodynamiques ;
- le corps comprend deux premières surfaces cylindriques externes de guidage qui ont un troisième diamètre, et une première surface cylindrique externe d'évacuation d'huile qui a un quatrième diamètre inférieur audit troisième diamètre et qui s'étend entre les deux surfaces de guidage, ces premières surfaces de guidage étant configurées pour former des films d'huile de guidage ;
- le corps cylindrique comprend des conduits internes radiaux qui s'étendent depuis un alésage interne du corps cylindrique jusqu'aux deux premières surfaces cylindriques de guidage ;
- chacun des satellites comprend deux secondes surfaces cylindriques internes de guidage, et une seconde surface cylindrique interne d'évacuation d'huile qui s'étend entre les deux secondes surfaces de guidage, ces secondes surfaces de guidage s'étendant autour des premières surfaces de guidage pour former lesdits films d'huile de guidage ;
- ladite seconde surface d'évacuation s'étend autour et avec un jeu prédéterminé de ladite première surface d'évacuation ;
- les secondes surfaces de guidage et la seconde surface d'évacuation ont sensiblement un même cinquième diamètre ;
- les secondes surfaces de guidage s'étendent axialement et respectivement sur toute l'étendue axiale des séries de dents de la seconde denture, et la seconde surface d'évacuation s'étend axialement sur toute l'étendue axiale des séries de dents de la première denture ;
- chacun des satellites comprend un manchon cylindrique et un voile annulaire s'étendant sensiblement radialement vers l'extérieur depuis le milieu de ce manchon, les dents de la seconde denture étant situées aux extrémités axiales du manchon, et les dents de la première denture étant situées à la périphérie externe du voile ;
- le manchon comporte des ouvertures traversantes d'évacuation d'huile situées de part et d'autre dudit plan et entre les séries de dents de la seconde denture ;
- les ouvertures sont situées dans deux plans perpendiculaires à l'axe de rotation de chacun des satellites et passant respectivement entre la première denture et les séries de dents de la seconde denture ;
- les ouvertures sont situées aux extrémités axiales de la première surface d'évacuation, voire également de la seconde surface d'évacuation.

L'invention concerne en outre une turbomachine, en particulier d'aéronef, comportant un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une vue partielle en coupe axiale d'un réducteur mécanique,
[Fig.3] la figure 3 est une autre vue partielle en coupe axiale d'un réducteur mécanique, et illustre la technique antérieure à la présente invention,
[Fig.4] la figure 4 est une vue schématique en coupe axiale et en perspective d'un réducteur à double étage d'engrènement symétrique, et illustre également la technique antérieure à la présente invention,
[Fig.5] la figure 5 est une autre vue schématique en coupe axiale du réducteur de la figure 4 ;
[Fig.6] la figure 6 est une vue schématique en coupe axiale et en perspective d'un réducteur selon un mode de réalisation de l'invention,
[Fig.7] la figure 7 est une autre vue schématique en coupe axiale du réducteur de la figure 6 ; et
[Fig.8] la figure 8 est une vue à plus grande échelle d'une partie du réducteur de la figure 6.

### Description détaillée de l'invention

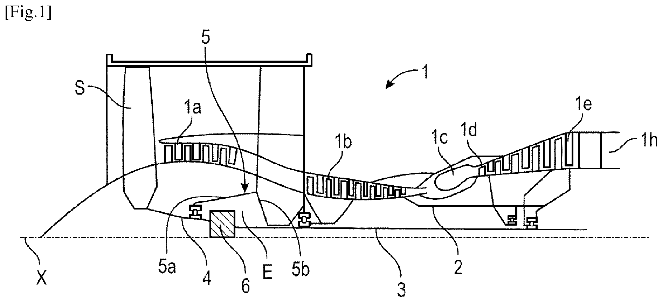

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

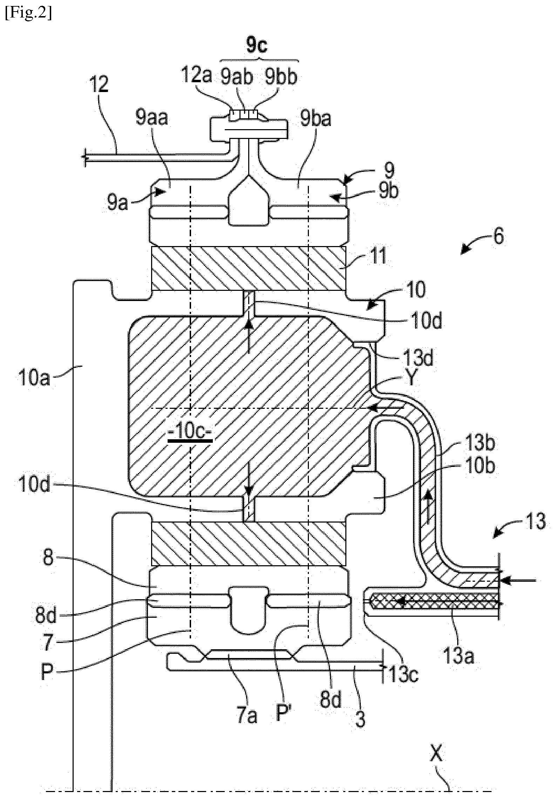

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenu par un châssis appelé porte-satellites 10. Chaque satellite 8 tourne autour de son propre axe Y, et engrène avec la couronne 9.

En sortie nous avons :
▪ Dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ Dans une autre configuration planétaire, l'ensemble des satellites 8 est maintenu par un porte-satellites 10 qui est fixé au carter moteur ou stator 5. Chaque satellite 8 entraine la couronne qui est rapportée à l'arbre de soufflante 4 via un porte-couronne 12.
▪ Dans une autre configuration différentielle, l'ensemble des satellites 8 est maintenu par un porte-satellites 10 qui est relié à un premier arbre de soufflante 5. Chaque satellite 8 entraine la couronne qui est rapportée à un second arbre de soufflante contrarotatif 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange, les axes 10b et le châssis 10a peuvent être séparés en plusieurs pièces.

Pour les mêmes raisons citées précédemment, la denture d'un satellite peut être séparée en plusieurs hélices ou dents présentant chacun un plan médian P, P'. Dans notre exemple, nous détaillons le fonctionnement d'un réducteur dont chaque satellite comprend deux séries de dents en chevron coopérant avec une couronne séparée en deux demi-couronnes:
▪ Une demi-couronne amont 9a constituée d'une jante 9aa et d'une demi-bride de fixation 9ab. Sur la jante 9aa se trouve l'hélice avant engrenée avec une hélice de la denture 8d de chaque satellite 8. L'hélice de la denture 8d engrène également avec celle du solaire 7.
▪ Une demi-couronne aval 9b constituée d'une jante 9ba et d'une demi-bride de fixation 9bb. Sur la jante 9ba se trouve l'hélice arrière engrenée avec une hélice de la denture 8d de chaque satellite 8. L'hélice de la denture 8d engrène également avec celle du solaire 7.

Si les largeurs d'hélice varient entre le solaire 7, les satellites 8 et la couronne 9 à cause des recouvrements de denture, elles sont toutes centrées sur un plan médian P pour les dents amont et sur un autre plan médian P' pour les dents aval.

La figure 2 illustre ainsi le cas d'un réducteur à simple étage d'engrènement, c'est-à-dire qu'une même denture 8d de chaque satellite 8 coopère à la fois avec le solaire 7 et la couronne 9. Même si la denture 8d comprend deux séries de dents, ces dents ont le même diamètre moyen et forment une seule et même denture appelée chevron.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

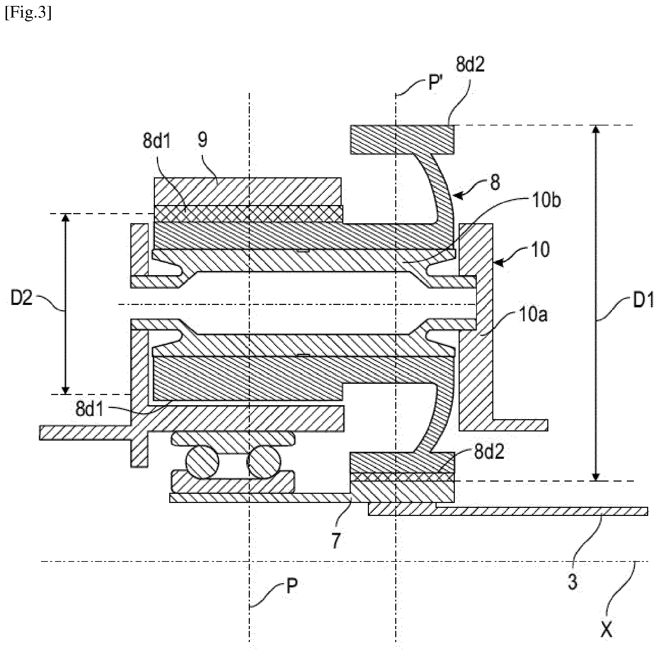

La figure 3 montre un autre exemple d'architecture de réducteur, dit à double étage d'engrènement, dans lequel chaque satellite 8 comprend deux dentures 8d1, 8d2 distinctes configurées pour coopérer respectivement avec la couronne 9 et le solaire 7.

Dans cette figure 3, les éléments déjà décrits dans ce qui précède sont désignés par les mêmes références.

La denture 8d1 d'engrènement avec la couronne 9 a un diamètre moyen noté D2 et est situé dans un plan médian P. La denture 8d2 d'engrènement avec le solaire 7 a un diamètre moyen noté D1 et est situé dans un autre plan médian P'. Les plans médians P, P' sont parallèles entre eux et perpendiculaires à l'axe X. Le diamètre D2 est inférieur au diamètre D1. Enfin, chaque denture 8d1, 8d2 comprend ici une seule hélice.

Comme évoqué dans ce qui précède, cette architecture « double étage » génère des moments non négligeables au niveau des satellites 8 en particulier car ce double étage est à denture asymétrique.

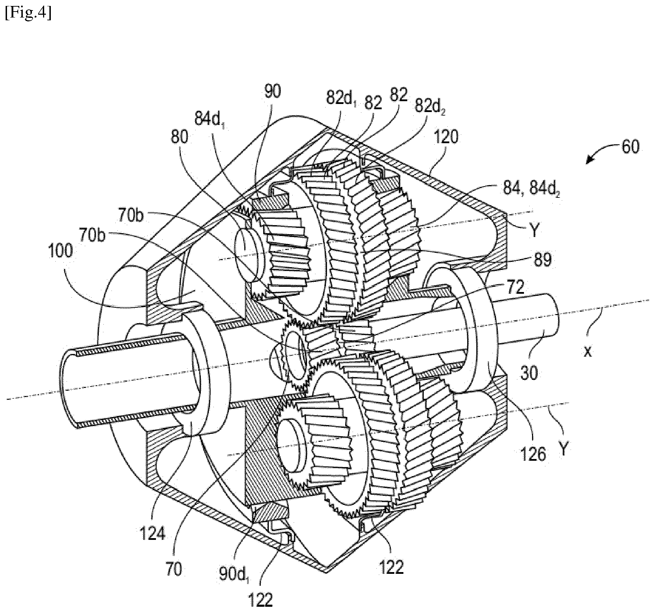

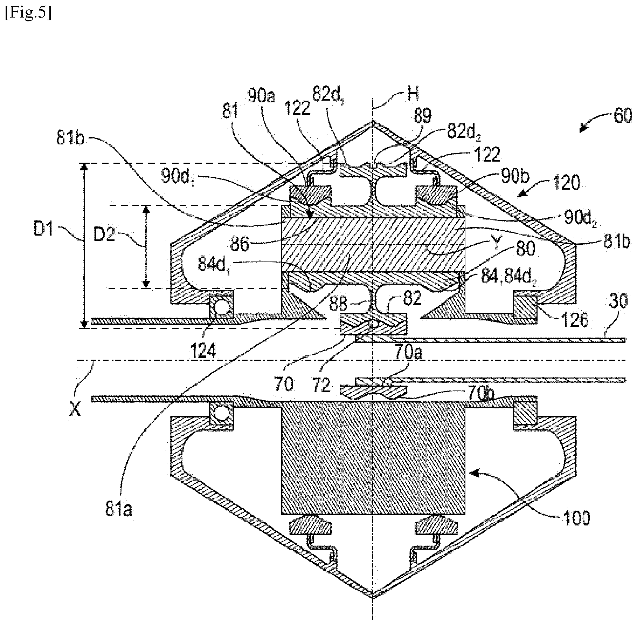

Les figures 4 et 5 montrent un réducteur 60 à double denture symétrique, qui permet de résoudre le problème précité.

Ce réducteur 60 comprend :
- un solaire 70 ayant un axe de rotation X,
- une couronne 90 qui s'étend autour du solaire et qui est configurée pour être immobile en rotation autour de l'axe X, et
- des satellites 80 qui sont engrenés avec le solaire 70 et la couronne 90 et qui sont maintenus par un porte-satellites 100 qui est configuré pour être mobile en rotation autour de l'axe X.

On définit le plan H comme étant un plan médian perpendiculaire à l'axe X et passant sensiblement au milieu du réducteur 60 (figure 5).

Le solaire 70 comprend des cannelures internes 70a d'accouplement avec l'arbre BP 30 ainsi qu'une denture externe 70b d'engrènement avec les satellites 80. La denture 70b présente deux séries de dents adjacentes en chevron, séparées l'une de l'autre par une rainure annulaire 72 orientée radialement vers l'extérieur. La denture 70b est symétrique par rapport au plan H, ses dents étant situées de part et d'autre du plan H qui passe par la rainure 72.

La couronne 90 est formée par deux anneaux indépendants 90a, 90b et comprend une denture qui est séparée en deux séries de dents 90d1, 90d2 en chevron portées respectivement par les deux anneaux.

Les anneaux 90a, 90b sont disposés de manière symétrique par rapport au plan H qui s'étend donc entre ces anneaux. Les anneaux sont reliés et fixés à un porte-couronne 120 par l'intermédiaire de flasques annulaires 122 de liaison. Les flasques 122 sont indépendants l'un de l'autre, chaque flasque ayant en demi section axiale une forme générale en S lui procurant une certaine souplesse radiale par déformation élastique en fonctionnement.

Chaque anneau 90a, 90b s'étend autour de l'axe X et est fixé au flasque 122 correspondant par sa périphérie externe. Sa périphérie interne comprend une des dents 90d1, 90d2.

Le porte-couronne 120 a une forme générale annulaire autour de l'axe X et plus particulièrement biconique. Il comprend ainsi un premier tronçon amont ou à gauche sur le dessin, avec une extrémité amont de plus petit diamètre, et une extrémité aval de plus grand diamètre qui est reliée à l'extrémité amont de plus grand diamètre de l'autre tronçon, aval ou à droite sur le dessin. Les extrémités de plus grand diamètre des tronçons sont donc reliées entre elles, et leurs extrémités de plus petits diamètres forment les extrémités axiales du porte-couronne.

L'extrémité amont du porte-couronne 120 s'étend autour du porte-satellites 100 ou d'un arbre relié à ce porte-satellites, et est centré et guidé en rotation sur le porte-satellite ou l'arbre par l'intermédiaire d'au moins un palier 124. De la même façon, l'extrémité aval du porte-couronne 120 s'étend autour du porte-satellites 100 ou d'un arbre relié à ce porte-satellites, et est centré et guidé en rotation sur le porte-satellite ou l'arbre par l'intermédiaire d'au moins un autre palier 126.

Comme c'est le cas de la couronne 90, le porte-couronne 120 présente une symétrie par rapport au plan H qui coupe le porte-couronne en son milieu et passe donc par les extrémités de plus grand diamètre des tronçons précités. Chaque satellite 80 comporte une première denture 82 de diamètre moyen D1 pour l'engrènement avec le solaire 70, et une seconde denture 84 de diamètre moyen D2, différent de D1 et en particulier inférieur à D1, pour l'engrènement avec la couronne 90. Les diamètres moyens sont mesurés depuis l'axe Y de chaque satellite et représentent chacun la moyenne entre le diamètre maximal et le diamètre minimal d'une denture de ce satellite.

Chaque satellite 80 comprend un manchon cylindrique 86 et un voile annulaire 88 s'étendant sensiblement radialement vers l'extérieur depuis le milieu de ce manchon 86. La denture 84 est séparée en deux séries de dents 84d1, 84d2 en chevron qui sont situées respectivement sur les extrémités axiales du manchon 86. La denture 82 comprend deux séries de dents 82d1, 82d2 en chevron qui sont situées à la périphérie externe du voile 88 et qui sont séparées l'une de l'autre par une rainure annulaire 89 débouchant radialement vers l'extérieur par rapport à l'axe Y.

La denture 82 est traversée en son milieu par le plan H qui passe par la rainure 89, les dents 82d1, 82d2 étant donc disposées de part et d'autre du plan H. Les dents 84d1, 84d2 sont également disposées de manière symétrique par rapport au plan H.

La denture 82 et la périphérie externe du voile 88 ont une dimension axiale qui est inférieure à la distance axiale entre les anneaux 90a, 90b, ainsi qu'entre les flasques 122, de façon à ce que chaque satellite 80 puisse librement tourner dans le porte-couronne 120 et entre les anneaux 90a, 90b et les flasques 122.

Chacun des satellites 80 est guidé en rotation par un palier hydrodynamique 81 qui comprend un corps cylindrique 81a qui traverse le satellite 80, et en particulier son manchon 86, et qui est configuré pour former un film d'huile de guidage à l'intérieur du satellite.

Le corps 81a d'un palier 26 s'étend le long de l'axe Y et comprend à ses extrémités longitudinales des extensions 81b logées dans des orifices formant des sièges du porte-satellites 100.

Le corps 81a est en général tubulaire et comprend un alésage interne de circulation d'huile qui communique en général avec des conduits d'amenée d'huile jusqu'à une surface cylindrique externe du corps en vue de la formation du film d'huile entre cette surface et une surface cylindrique interne du satellite 80.

Dans l'exemple représenté qui illustre l'art antérieur, le palier hydrodynamique et le film d'huile s'étendent sur toute la longueur ou dimension axiale du satellite 80.

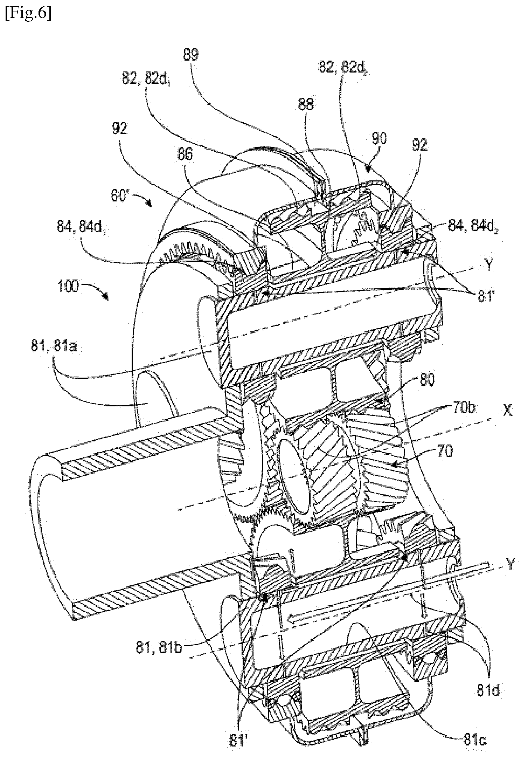

La présente invention propose un perfectionnement à cette technologie dont un mode de réalisation est représenté aux figures 6 à 8.

Le réducteur 60' des figures 6 à 8 comprend l'ensemble des caractéristiques décrites dans ce qui précède en relation avec les figures 3, 4 et 5 dans la mesure où elles ne sont pas contraires ou ne contredisent pas ce qui suit.

Les références utilisées dans les figures 6 à 8 et déjà utilisées dans les figures 3, 4 et 5 désignent donc des éléments identiques ou similaires.

Le satellite 80 est du type à double étage d'engrènement et comprend un manchon tubulaire 86 relié par un voile 88 à une première denture 82 externe, le manchon 86 étant lui-même équipé d'une seconde denture 84.

La première denture 82 a un diamètre moyen D1 et engrène avec le solaire 70, et la seconde denture 84 a un diamètre moyen D2, différent de D1 et en particulier inférieur à D1, et engrène avec la couronne 90. Les diamètres moyens sont mesurés depuis l'axe Y de chaque satellite 80 et représente la moyenne entre le diamètre maximal et le diamètre minimal d'une denture de ce satellite.

La denture 84 est séparée en deux séries de dents 84d1, 84d2, ici en chevron, qui sont situées respectivement sur les extrémités axiales du manchon 86. La denture 82 comprend deux séries de dents 82d1, 82d2, ici également en chevron, qui sont situées à la périphérie externe du voile 88 et qui sont séparées l'une de l'autre par une rainure annulaire 89 débouchant radialement vers l'extérieur par rapport à l'axe Y.

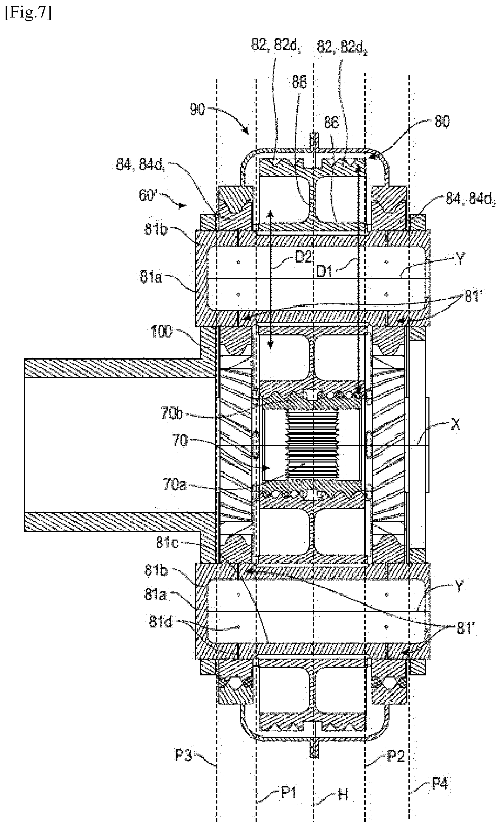

La denture 82 est traversée en son milieu par le plan H qui passe par la rainure 89, les dents 82d1, 82d2 étant donc disposées de part et d'autre du plan H. Les dents 84d1, 84d2 sont également disposées de manière symétrique par rapport au plan H (cf. figure 7).

Chacun des satellites 80 est guidé en rotation par deux paliers hydrodynamiques 81' qui sont formés par un corps cylindrique 81a qui traverse le satellite 80, et en particulier son manchon 86, et qui est configuré pour former deux films d'huile H1, H2 de guidage à l'intérieur du satellite 80. La description qui suit concerne un satellite 80 et ses paliers hydrodynamiques 81' de guidage mais on comprend qu'elle s'applique à l'ensemble des satellites 80 et paliers hydrodynamiques 81' du réducteur 60'. Le corps 81a s'étend le long de l'axe Y et comprend à ses extrémités longitudinales des extensions 81b logées dans des orifices formant des sièges du porte-satellites 100.

Le corps 81a est en général tubulaire et comprend un alésage interne 81c de circulation d'huile qui communique avec des conduits 81d d'amenée d'huile jusqu'à des surfaces cylindriques externes 81e du corps en vue de la formation des deux films d'huile H1, H2 entre ces surfaces 81e et des surfaces cylindriques internes 80a du satellite 80.

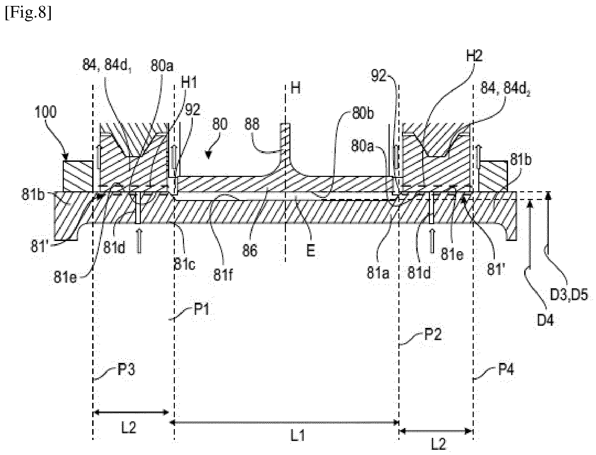

Les surfaces 81e sont à distance axiale l'une de l'autre et séparées l'une de l'autre par une surface cylindrique externe 81f. Comme on le voit mieux à la figure 8, la surface 81f a un diamètre D4 qui est inférieur au diamètre D3 des surfaces 81e.

La surface 81f a une étendue ou dimension axiale L1 qui est égale à l'étendue ou dimension axiale de la première denture 82 du satellite 80. Cette surface 81f est donc bornée par deux plans P1, P2 perpendiculaires à l'axe Y et donc parallèles entre eux et au plan H, qui passent respectivement par les extrémités axiales de la première denture 82.

Chacune des surfaces 81e a une étendue ou dimension axiale L2 qui est égale à l'étendue ou dimension axiale d'une série de dents 84d1, 84d2 de la seconde denture 84 du satellite 80. Chaque surface 81e est bornée par l'un des plans P1, P2 et par un autre plan P3, P4 perpendiculaire à l'axe Y et passant par une extrémité axiale libre du satellite 80.

On comprend donc que la surface 81f s'étend à l'intérieur et le long de la première denture 82, et que les surfaces 81e s'étendent respectivement le long et à l'intérieur des séries de dents 84d1, 84d2 de la seconde denture 84. Plusieurs conduits 81d peuvent déboucher sur chaque surface 81e.

Les surfaces 80a de chaque satellite 80 sont séparées l'une de l'autre par une surface cylindrique interne 80b.

Comme on le voit mieux à la figure 8, les surfaces 80a et 80b ont sensiblement un même diamètre D5.

La surface 80b a une étendue ou dimension axiale L1 et donc la même étendue que la surface 81f.

Chacune des surfaces 80a a une étendue ou dimension axiale L2 et donc la même étendue qu'une surface 81e.

On comprend donc que la surface 81f s'étend à l'intérieur et le long de la surface 80b, et que les surfaces 80a s'étendent respectivement le long et à l'intérieur des surfaces 81e.

On comprend également que les surfaces 80a, 81e de chaque paire de surfaces 80a-81e sont à faible distance radiale l'une de l'autre de façon à définir un film d'huile sous pression entre elles. Les surfaces 80b, 81e sont au contraire à une distance radiale importante l'une de l'autre de façon à éviter la formation d'un film d'huile sous pression dans l'espace annulaire E qui les sépare. Les deux films d'huile sous pression H1, H2 sont ainsi à distance et indépendants l'un de l'autre, en particulier car ils sont alimentés par des conduits 81d différents.

Les figures 6 à 8 montrent que chaque satellite 80 comprend des ouvertures 92 de passage d'huile au niveau du manchon 86, et plus particulièrement dans les plans P1 et P2 précités. Une première rangée annulaire d'ouvertures 92 découche radialement vers l'intérieur au niveau des extrémités axiales des surfaces 80b, 81f, et une seconde rangée annulaire d'ouvertures 92 débouche radialement vers l'intérieur au niveau des extrémités axiales opposées de ces surfaces 80b, 81f.

Les flèches des figures 6 à 8 montrent la circulation de l'huile dans le corps 81 d'un satellite 80. De l'huile est injectée dans l'alésage 81c du corps 81 et passe à travers les conduits 81d pour former des films d'huile H1, H2 entre les surfaces 80b, 81f. Une partie de cette huile s'échappe du côté du plan H et est ensuite principalement évacuée radialement vers l'extérieur à travers les ouvertures 92. Le reste de l'huile est évacuée du côté opposé, radialement vers l'extérieur au niveau des plans P3 et P4.

## Revendications

1. Réducteur mécanique (60') de turbomachine (1), en particulier d'aéronef, ce réducteur comportant :
- un solaire (70) ayant un axe (X) de rotation,
- une couronne (90) qui s'étend autour du solaire (70),
- des satellites (80) qui sont engrenés avec le solaire (70) et la couronne (90), chaque satellite (80) comportant une première denture (82) ayant un premier diamètre moyen (D1) pour l'engrènement avec le solaire (70), et une seconde denture (84) ayant un second diamètre moyen (D2), différent dudit premier diamètre moyen (D1), pour l'engrènement avec la couronne (90), les première et seconde dentures (82, 84) de chaque satellite (80) présentant une symétrie par rapport à un plan (H) perpendiculaire audit axe (X) et passant sensiblement au milieu du satellite (80), chacune des première et seconde dentures (82, 84) comprenant deux séries de dents (82d1, 82d2, 84d1, 84d2), les deux séries de dents (82d1, 82d2) de la première denture (82) étant disposée de part et d'autre dudit plan (H), et les deux séries de dents (84d1, 84d2) de la seconde denture (84) étant disposées de part et d'autre dudit plan (H) et de la première denture (82),
- des paliers hydrodynamiques (81') de guidage en rotation des satellites (80), ces paliers hydrodynamiques (81') étant portés par un porte-satellites (100) et comprenant des corps cylindriques (81a) qui sont engagés dans les satellites (80) et qui sont configurés pour être alimentés en huile et pour former des films d'huile (H1, H2) de guidage entre les corps cylindriques (81a) et les satellites (80),
**caractérisé en ce que** chacun des satellites (80) est guidé par deux paliers hydrodynamiques (81') indépendants l'un de l'autre et disposés respectivement de part et d'autre dudit plan (H), au droit des séries de dents (84d1, 84d2) de la seconde denture (84).

2. Réducteur mécanique (60') selon la revendication 1, dans lequel chacun des satellites (80) est traversé par un unique corps cylindrique (81a) définissant lesdits deux paliers hydrodynamiques (81').

3. Réducteur mécanique (60') selon la revendication précédente, dans lequel le corps (81a) comprend deux premières surfaces cylindriques externes (81e) de guidage qui ont un troisième diamètre (D3), et une première surface cylindrique externe (81f) d'évacuation d'huile qui a un quatrième diamètre (D4) inférieur audit troisième diamètre (D3) et qui s'étend entre les deux premières surfaces de guidage (81e), ces premières surfaces de guidage (81e) étant configurées pour former des films d'huile (H1, H2) de guidage.

4. Réducteur mécanique (60') selon la revendication précédente, dans lequel le corps cylindrique (81a) comprend des conduits internes (81d) radiaux qui s'étendent depuis un alésage interne (81c) du corps cylindrique (81a) jusqu'aux deux premières surfaces cylindriques (81e) de guidage.

5. Réducteur mécanique (60') selon la revendication 3 ou 4, dans lequel chacun des satellites (80) comprend deux secondes surfaces cylindriques internes (80a) de guidage, et une seconde surface cylindrique interne (80b) d'évacuation d'huile qui s'étend entre les deux secondes surfaces (80a) de guidage, ces secondes surfaces de guidage (80a) s'étendant autour des premières surfaces de guidage (81e) pour former lesdits films d'huile de guidage (H1, H2), et ladite seconde surface d'évacuation (80b) s'étendant autour et avec un jeu prédéterminé de ladite première surface d'évacuation (81f).

6. Réducteur mécanique (60') selon la revendication précédente, dans lequel les secondes surfaces de guidage (80a) et la seconde surface d'évacuation (80b) ont sensiblement un même cinquième diamètre (D5).

7. Réducteur mécanique (60') selon la revendication 5 ou 6, dans lequel les secondes surfaces de guidage (80a) s'étendent axialement et respectivement sur toute l'étendue axiale des séries de dents (84d1, 84d2) de la seconde denture (84), et la seconde surface d'évacuation (80b) s'étend axialement sur toute l'étendue axiale des séries de dents (82d1, 82d2) de la première denture (82).

8. Réducteur mécanique (60') selon l'une des revendications précédentes, dans lequel chacun des satellites (80) comprend un manchon (86) cylindrique et un voile (88) annulaire s'étendant sensiblement radialement vers l'extérieur depuis le milieu de ce manchon (86), les dents (84d1, 84d2) de la seconde denture (84) étant situées aux extrémités axiales du manchon (86), et les dents (82d1, 82d2) de la première denture (82) étant situées à la périphérie externe du voile (88), le manchon (86) comportant des ouvertures (92) traversantes d'évacuation d'huile situées de part et d'autre dudit plan (H) et entre les séries de dents (84d1, 84d2) de la seconde denture (84).

9. Réducteur mécanique (60') selon la revendication précédente, dans lequel les ouvertures (92) sont situées aux extrémités axiales de la première surface d'évacuation (81f), voire également de la seconde surface d'évacuation (80b).

10. Réducteur mécanique (60') selon la revendication 8 ou 9, dans lequel les ouvertures (92) sont situées dans deux plans (P1, P2) perpendiculaires à l'axe (Y) de rotation de chacun des satellites (80) et passant respectivement entre la première denture (82) et les séries de dents (84d1, 84d2) de la seconde denture (84).

11. Turbomachine (1), en particulier d'aéronef, comportant un réducteur mécanique (60') selon l'une des revendications précédentes.

## Patentansprüche

1. Mechanisches Untersetzungsgetriebe (60') einer Turbomaschine (1), insbesondere eines Luftfahrzeugs, wobei dieses Untersetzungsgetriebe umfasst:
- ein Sonnenrad (70), das eine Drehachse (X) aufweist,
- eine Krone (90), die sich um das Sonnenrad (70) erstreckt,
- Planeten (80), die mit dem Sonnenrad (70) und der Krone (90) verzahnt sind, wobei jeder Planet (80) eine erste Verzahnung (82) mit einem ersten mittleren Durchmesser (D1) zum Verzahnen mit dem Sonnenrad (70) und eine zweite Verzahnung (84) mit einem zweiten mittleren Durchmesser (D2), der sich von dem ersten mittleren Durchmesser (D1) unterscheidet, zum Verzahnen mit der Krone (90) umfasst, wobei die erste und die zweite Verzahnung (82, 84) jedes Planeten (80) eine Symmetrie in Bezug auf eine Ebene (H) aufweisen, die senkrecht zur Achse (X) und im Wesentlichen in der Mitte des Planeten (80) verläuft, wobei jede der ersten und der zweiten Verzahnung (82, 84) zwei Zahnreihen (82d1, 82d2, 84d1,84d2) umfasst, wobei die zwei Zahnreihen (82d1,82d2) der ersten Verzahnung (82) auf beiden Seiten der Ebene (H) angeordnet sind und die zwei Zahnreihen (84d1, 84d2) der zweiten Verzahnung (84) auf beiden Seiten der Ebene (H) und der ersten Verzahnung (82) angeordnet sind,
- hydrodynamische Lager (81') zur drehenden Führung der Planeten (80), wobei diese hydrodynamischen Lager (81') von einem Planetenträger (100) getragen werden und zylindrische Körper (81a) umfassen, die in die Planeten (80) eingreifen und dazu ausgelegt sind, mit Öl versorgt zu werden und Führungsölfilme (H1, H2) zwischen den zylindrischen Körpern (81a) und den Planeten (80) zu bilden,
**dadurch gekennzeichnet, dass** jeder der Planeten (80) von zwei hydrodynamischen Lagern (81') geführt wird, die voneinander unabhängig sind und jeweils auf beiden Seiten der Ebene (H) direkt unter den Zahnreihen (84d1,84d2) der zweiten Verzahnung (84) angeordnet sind.

2. Mechanisches Untersetzungsgetriebe (60') nach Anspruch 1, wobei jeder der Planeten (80) von einem einzigen zylindrischen Körper (81a) durchquert wird, der die zwei hydrodynamischen Lager (81') definiert.

3. Mechanisches Untersetzungsgetriebe (60') nach dem vorstehenden Anspruch, wobei der Körper (81a) zwei erste äußere zylindrische Führungsflächen (81c), die einen dritten Durchmesser (D3) aufweisen, und eine erste äußere zylindrische Ölablassfläche (81) umfasst, die einen vierten Durchmesser (D4) kleiner als der dritte Durchmesser (D3) aufweist und die sich zwischen den zwei ersten Führungsflächen (81e) erstreckt, wobei diese ersten Führungsflächen (81e) dazu ausgelegt sind, Führungsölfilme (H1, H2) zu bilden.

4. Mechanisches Untersetzungsgetriebe (60') nach dem vorstehenden Anspruch, wobei der zylindrische Körper (81a) radiale innere Leitungen (81d) umfasst, die sich ausgehend von einer inneren Bohrung (81c) des zylindrischen Körpers (81a) bis zu den zwei ersten zylindrischen Führungsflächen (81e) erstrecken.

5. Mechanisches Untersetzungsgetriebe (60') nach Anspruch 3 oder 4, wobei jeder der Planeten (80) zwei zweite innere zylindrische Führungsflächen (80a) und eine zweite innere zylindrische Ölablassfläche (80b), die sich zwischen den zwei zweiten Führungsflächen (80a) erstreckt, umfasst, wobei diese zweiten Führungsflächen (80a) sich um die ersten Führungsflächen (81e) erstrecken, um die Führungsölfilme (H1, H2) zu bilden, und die zweite Ablassfläche (80b) sich um die erste Ablassfläche (81f) und mit einem vorbestimmten Spiel zu dieser erstreckt.

6. Mechanisches Untersetzungsgetriebe (60') nach dem vorstehenden Anspruch, wobei die zweiten Führungsflächen (80a) und die zweite Ablassfläche (80b) im Wesentlichen einen gleichen fünften Durchmesser (D5) aufweisen.

7. Mechanisches Untersetzungsgetriebe (60') nach Anspruch 5 oder 6, wobei die zweiten Führungsflächen (80a) sich axial und jeweils über die gesamte axiale Ausdehnung der Zahnreihen (84d1, 84d2) der zweiten Verzahnung (84) erstrecken und die zweite Ablassfläche (80b) sich axial über die gesamte Ausdehnung der Zahnreihen (82d1,82d2) der ersten Verzahnung (82) erstreckt.

8. Mechanisches Untersetzungsgetriebe (60') nach einem der vorstehenden Ansprüche, wobei jeder der Planeten (80) eine zylindrische Muffe (86) und ein ringförmiges Gewinde (88) umfasst, das sich ausgehend von der Mitte dieser Muffe (86) im Wesentlichen radial zur Außenseite erstreckt, wobei die Zähne (84d1,84d2) der zweiten Verzahnung (84) an axialen Enden der Muffe (86) gelegen sind, und die Zähne (82d1,82d2) der ersten Verzahnung (82) am Außenumfang des Gewindes (88) gelegen sind, wobei die Muffe (86) Durchgangsöffnungen (92) zum Ablassen von Öl umfasst, die auf beiden Seiten der Ebene (H) und zwischen den Zahnreihen (84d1,84d2) der zweiten Verzahnung (84) gelegen sind.

9. Mechanisches Untersetzungsgetriebe (60') nach dem vorstehenden Anspruch, wobei die Öffnungen (92) an den axialen Enden der ersten Ablassfläche (81f), sogar ebenfalls der zweiten Ablassfläche (80b) gelegen sind.

10. Mechanisches Untersetzungsgetriebe (60') nach Anspruch 8 oder 9, wobei die Öffnungen (92) in zwei Ebenen (P1, P2) gelegen sind, die senkrecht zur Drehachse (Y) jedes der Planeten (80) und jeweils zwischen der ersten Verzahnung (82) und den Zahnreihen (84d1, 84d2) der zweiten Verzahnung (84) verlaufen.

11. Turbomaschine (1), insbesondere eines Luftfahrzeugs, die ein mechanisches Untersetzungsgetriebe (60) nach einem der vorstehenden Ansprüche umfasst.

## Claims

1. A mechanical reduction gear (60') for a turbomachine (1), in particular for an aircraft, this reduction gear comprising:
- a sun gear (70) having an axis (X) of rotation,
- a ring gear (90) which extends around the sun gear (70)
- planet gears (80) which are meshed with the sun gear (70) and the ring gear (90), each planet gear (80) comprising a first toothing (82) having a first mean diameter (D1) for meshing with the sun gear (70), and a second toothing (84) having a second mean diameter (D2) different from the first mean diameter (D1), for meshing with the ring gear (90), the first and second toothing (82, 84) of each planet gear (80) being symmetrical with respect to a plane (H) perpendicular to said axis (X) and passing substantially through the middle of the planet gear (80), each of the first and second toothings (82, 84) comprising two series of teeth (82d1, 82d2, 84d1, 84d2), the two series of teeth (82d1, 82d2) of the first toothing (82) being disposed on either side of said plane (H), and the two series of teeth (84d1, 84d2) of the second toothing (84) being disposed on either side of said plane (H) and the first toothing (82)
- hydrodynamic bearings (81') for guiding the planet gears (80) in rotation, these hydrodynamic bearings (81') being carried by a planet carrier (100) and comprising cylindrical bodies (81a) which are engaged in the planet gears (80) and which are configured so as to be supplied with oil and so as to form guiding oil films (H1, H2) between the cylindrical bodies (81a) and the planet gears (80),
**characterised in that** each of the planet gears (80) is guided by two hydrodynamic bearings (81') independent of each other and arranged respectively on either side of said plane (H), in line with the series of teeth (84d1, 84d2) of the second toothing (84).

2. The mechanical reduction gear (60') according to claim 1, wherein each of the planet gears (80) is crossed by a single cylindrical body (81a) defining said two hydrodynamic bearings (81').

3. The mechanical reduction gear (60') according to the preceding claim, wherein the body (81a) comprises two first guiding external cylindrical surfaces (81e) which have a third diameter (D3), and a first oil discharge external cylindrical surface (81f) which has a fourth diameter (D4) less than said third diameter (D3) and which extends between the two first guiding surfaces (81e), these first guiding surfaces (81e) being configured to form guiding oil films (H1, H2).

4. The mechanical reduction gear (60') according to the preceding claim, wherein the cylindrical body (81a) comprises radial internal ducts (81d) which extend from an internal bore (81c) of the cylindrical body (81a) to the two first guiding cylindrical surfaces (81e).

5. The mechanical reduction gear (60') according to claim 3 or 4, wherein each of the planet gears (80) comprises two second guiding internal cylindrical surfaces (80a), and a second oil discharge internal cylindrical surface (80b) which extends between the two second guiding surfaces (80a), these second guiding surfaces (80a) extending around the first guiding surfaces (81e) to form said guide oil films (H1, H2), and said second discharge surface (80b) extending around and with a predetermined clearance from said first discharge surface (81f).

6. The mechanical reduction gear (60') according to the preceding claim, wherein the second guiding surfaces (80a) and the second discharge surface (80b) have substantially a same fifth diameter (D5).

7. The mechanical reduction gear (60') according to claim 5 or 6, wherein the second guiding surfaces (80a) extend axially and respectively over the entire axial extent of the series of teeth (84d1, 84d2) of the second toothing (84), and the second discharge surface (80b) extends axially over the entire axial extent of the series of teeth (82d1, 82d2) of the first toothing (82).

8. The mechanical reduction gear (60') according to one of the preceding claims, wherein each of the planet gears (80) comprises a cylindrical sleeve (86) and an annular web (88) extending substantially radially outwards from the middle of that sleeve (86), the teeth (84d1, 84d2) of the second toothing (84) being located at the axial ends of the sleeve (86) and the teeth (82d1, 82d2) of the first toothing (82) being located at the external periphery of the web (88), the sleeve (86) comprising through openings for oil discharge (92) located on either side of said plane (H) and between the series of teeth (84d1, 84d2) of the second toothing (84).

9. The mechanical reduction gear (60') according to the preceding claim, wherein the openings (92) are located at the axial ends of the first discharge surface (81f), or even of the second discharge surface (80b).

10. The mechanical reduction gear (60') according to claim 8 or 9, wherein the openings (92) are located in two planes (P1, P2) perpendicular to the axis (Y) of rotation of each of the planet gears (80) and passing respectively between the first toothing (82) and the series of teeth (84d1, 84d2) of the second toothing (84).

11. A turbomachine (1), in particular of an aircraft, comprising a mechanical reduction gear (60') according to one of the preceding claims.
